# EUROPÄISCHE PATENTSCHRIFT

(11) **EP 2 402 237 B1**
(45) Veröffentlichungstag und Bekanntmachung des Hinweises auf die Patenterteilung: **07.02.2018**
(21) Anmeldenummer: 11168867.7
(22) Anmeldetag: 07.06.2011
(51) Int. Cl.: B62J 7/04, B62J 9/00, B62J 7/08

(54) **Befestigungseinrichtung für ein abnehmbar an einem Motorrad fixierten bzw. fixierbaren Gepäckbehälter**
Fixing device for baggage container which can be removably attached to a motorcycle
Dispositif de fixation pour un support à bagages fixé de façon amovible sur une moto

(30) Priorität: 30.06.2010 DE 102010030687
(43) Veröffentlichungstag der Anmeldung: 04.01.2012
(73) Patentinhaber: Bayerische Motoren Werke Aktiengesellschaft, 80809 München (DE)
(72) Erfinder: Reinhart, Peter, 82380 Peissenberg (DE); Müller, Benedikt, 83026 Rosenheim (DE)

(56) Entgegenhaltungen:
- WO-A1-2004/076269
- DE-A1- 19 609 692
- DE-U1- 29 921 906
- JP-A- 2005 034 578
- US-A- 4 174 796
- US-A1- 2009 001 113

## Beschreibung

Die vorliegende Erfindung betrifft eine Befestigungseinrichtung für einen abnehmbar an einem Motorrad fixierten bzw. fixierbaren Gepäckbehälter gemäß dem Oberbegriff des Patentanspruches 1.

Eine derartige Befestigungseinrichtung ist aus der JP-A-2005034578 bekannt.

Aufgabe der Erfindung ist es, eine Befestigungseinrichtung für einen abnehmbar an einem Motorrad fixierbaren Gepäckbehälter zu schaffen, die ein einfaches und komfortables Auf- bzw. Ansetzen des Gepäckbehälters an das Motorrad und ein Fixieren des Gepäckbehälters mit einer Hand (Einhandbedienung) ermöglicht.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine Befestigungseinrichtung für einen abnehmbar an einem Motorrad fixierten bzw. fixierbaren Gepäckbehälter. Bei dem Gepäckbehälter kann es sich prinzipiell um einen beliebigen Gepäckbehälter handeln, wie z. B. um einen Seitenkoffer, der in einem Bereich seitlich oberhalb des Hinterrads des Motorrads angeordnet ist. Vorzugsweise handelt es sich bei dem Gepäckbehälter jedoch um ein so genanntes "Top-Case", d. h. um einen am Heck des Motorrads von oben her z. B. auf einer so genannten Gepäckbrücke befestigbaren bzw. befestigten Gepäckkoffer.

Der Gepäckbehälter weist eine Wandung - im Falle eines Top-Case, eine Unterseite - auf, von der mindestens zwei Formschlusselemente abstehen, die fest an dem Gepäckbehälter angeordnet bzw. einstückig mit dem Gepäckbehälter verbunden sind, sowie mindestens ein Formschlusselement, das bewegbar, insbesondere translatorisch verschieblich zwischen einer Montage-/Demontagestellung und einer Haltestellung an dem Gepäckbehälter angeordnet ist. Die zwei fest an dem Gepäckbehälter angeordneten Formschlusselemente können insbesondere stoffschlüssig mit dem Gepäckbehälter verbunden sein. Sie können z. B. einstückig mit dem Gepäckbehälter bzw. mit der Schale des Gepäckbehälters gegossen worden sein. Der Gepäckbehälter kann beispielsweise als Spritzgussteil ausgeführt sein.

Der Gepäckbehälter weist darüber hinaus eine "Betätigungseinrichtung" auf, mittels der das mindestens eine verschieblich angeordnete Formschlusselement bewegbar, insbesondere translatorisch verschiebbar ist. Der Begriff "Betätigungseinrichtung" ist äußerst breit zu interpretieren. Es kann sich hierbei beispielsweise um einen "Hebelmechanismus" mit einem schwenkbar angeordneten Hebel handeln, der über ein Gelenk oder über mehrere Gelenke mit dem mindestens einen verschieblich angeordneten Formschlusselement gekoppelt ist.

Die Befestigungseinrichtung gemäß der Erfindung weist ferner eine "Halteeinrichtung" auf, die an einem Motorrad befestigt ist. Bei der Halteeinrichtung kann es sich beispielsweise um eine so genannte Gepäckbrücke handeln, die auf den Gepäckbehälter bzw. auf dessen Formschlusselemente abgestimmt ist. Die Halteeinrichtung weist mindestens zwei zur Aufnahme der mindestens zwei fest angeordneten Formschlusselemente vorgesehene Aufnahmen und mindestens eine zur Aufnahme des mindestens einen verschieblich angeordneten Formschlusselements vorgesehene Aufnahme auf.

Soll der Gepäckbehälter an dem Motorrad befestigt werden, so wird er zunächst so an die Halteeinrichtung angesetzt bzw. auf die Halteeinrichtung aufgesetzt, dass die Formschlusselemente in die zugeordneten Aufnehmungen eingreifen. Diese Position des Gepäckbehälters wird als "Montage-/Demontagestellung" des Gepäckbehälters bezeichnet. Die Betätigungseinrichtung muss sich, um ein An- bzw. Aufsetzen des Gepäckbehälters zu ermöglichen, ebenfalls in einer "Montage-/Demontagestellung" befinden.

Es kann auch eine "Basis" vorgesehen sein, welche die fest angeordneten Formschlusselemente, die verschieblich angeordneten Formschlusselemente und die Betätigungseinrichtung umfasst, wobei die Basis mit dem Gepäckbehälter verbunden ist. Im Falle eines Top-Case kann die Basis mit der Unterseite des Top-Case verbunden sein.

Um den Gepäckbehälter am Motorrad zu fixieren, genügt es, die Betätigungseinrichtung von der Montage-/Demontagestellung in eine Haltestellung zu bewegen, was zur Folge hat, dass der Gepäckbehälter "automatisch" von seiner Montage-/Demontagestellung in seine Haltestellung verschoben wird.

Ein wesentlicher Vorteil der Erfindung besteht darin, dass das Betätigen der Betätigungseinrichtung mit sehr geringem Kraftaufwand möglich ist, sofern die Betätigungseinrichtung nur eine hinreichend hohe "Übersetzung" aufweist. Eine entsprechende Übersetzung ist z.B. durch einen Hebelmechanismus, einen Zahnradmechanismus o. ä. erreichbar.

Um eine einfach Handhabung zu ermöglichen, weist die Betätigungseinrichtung ein von Hand zu betätigendes Betätigungselement auf, bei dem es sich, wie bereits erwähnt, z. B. um einen schwenkbar angeordneten Hebel oder um ein schwenkbar, klappbar oder in anderer Weise beweglich angeordnetes Griffstück handeln kann. Der Hebel bzw. das Griffstück kann z. B. die Form eines Tragegriffs haben. Dies hat den Vorteil, dass das Betätigungselement in seiner Montage-/Demontagestellung als "Tragegriff" zum Tragen des Gepäckbehälters verwendet werden kann. Hierzu kann vorgesehen sein, dass das Betätigungselement in seiner Montage-/Demontagestellung von dem Gepäckbehälter absteht und zwar derart, dass es komfortabel von Hand greifbar ist. Ferner kann vorgesehen sein, dass das Betätigungselement in seiner Haltestellung an den Gepäckbehälter herangeklappt oder in einer Ausnehmung des Gepäckbehälters versenkt ist. In der Haltestellung ist somit sichergestellt, dass das Betätigungselement nicht vom Gepäckbehälter absteht, was ein ansonsten bestehendes eventuelles Gefährdungspotential ausschließt.

Nach einer Weiterbildung der Erfindung befindet sich das Betätigungselement in der Haltestellung in einer Totpunkt- bzw. Übertotpunktposition. Hiermit ist gemeint, dass sich das Betätigungselement in einer Stellung bzw. Position befindet, in der ein unbeabsichtigtes Verschieben des Gepäckbehälters von der Haltestellung in die Montage-/Demontagestellung mechanisch ausgeschlossen ist, z.B. durch Selbsthemmkräfte.

Die mindestens zwei Formschlusselemente, die fest an dem Gepäckbehälter angeordnet sind, können z. B. als hakenartige, winkelartige oder L-förmige Elemente ausgebildet sein. Es kann vorgesehen sein, dass sie in der Haltestellung des Gepäckbehälters die ihnen zugeordneten Aufnahmen, die an der Halteeinrichtung vorgesehen sind, formschlüssig von "hinten her" hintergreifen. Aus Stabilitätsgründen können drei bzw. vier derartige fest an dem Gepäckbehälter angeordnete Formschlusselemente vorgesehen sein. Ferner kann es von Vorteil sein, wenn anstatt nur eines verschieblich angeordneten Formschlusselements zwei verschieblich angeordnete Formschlusselemente vorgesehen sind.

Vorzugsweise sind die vorgesehenen fest bzw. verschieblich angeordneten Formschlusselemente symmetrisch bezüglich einer Mittellängsachse des Gepäckbehälters, die parallel zur Verschieberichtung des Gepäckbehälters ist, angeordnet. Eine symmetrische Anordnung ist von Vorteil, da dadurch ein Verkanten der Formschlusselemente mit den zugeordneten Ausnehmungen bei Verschieben des Gepäckbehälters von der Montage-/Demontagestellung in die Haltestellung, bzw. umgekehrt, vermieden wird.

Ferner kann vorgesehen sein, dass jeweils einem fest angeordneten Formschlusselement und einem verschieblich angeordneten Formschlusselement eine Aufnahme der Halteeinrichtung gemeinsam zugeordnet ist. Anders ausgedrückt kann vorgesehen sein, dass in eine Aufnahme der Halteeinrichtung jeweils ein fest mit dem Gepäckbehälter verbundenes und ein verschieblich an dem Gepäckbehälter angeordnetes Formschlusselement eingreifen.

Es kann vorgesehen sein, dass das mindestens eine verschieblich an dem Gepäckbehälter angeordnete Formschlusselement sowohl in der Montage-/Demontagestellung als auch in der Haltestellung in die ihm zugeordnete Aufnahme hineinragt. Im Unterschied zu den fest angeordneten Formschlusselementen hintergreift das mindestens eine verschieblich an dem Gepäckbehälter angeordnete Formschlusselement die Ausnehmung jedoch nicht unbedingt.

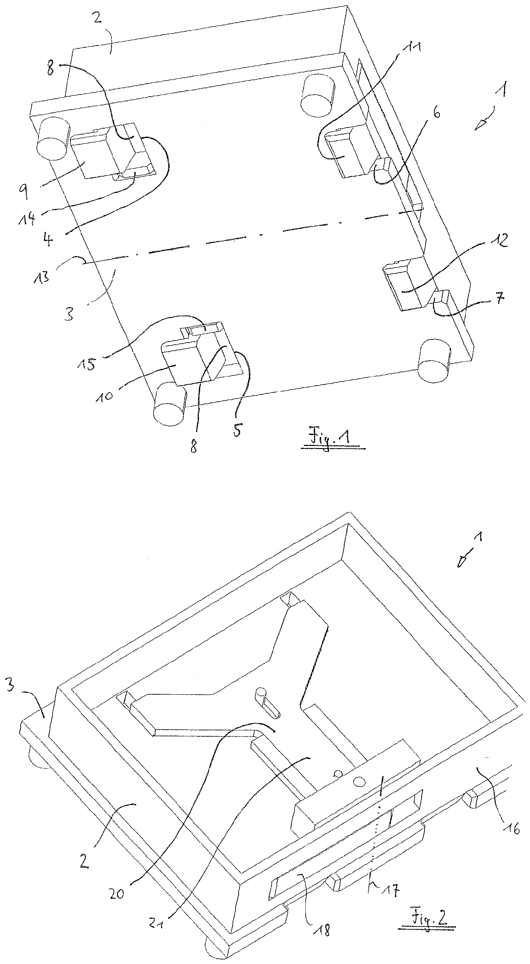

Im Folgenden wird die Erfindung im Zusammenhang mit der Zeichnung näher erläutert. Die Figuren 1 - 6 zeigen verschiedene Ansichten bzw. Darstellungen einer Befestigungseinrichtung für einen abnehmbar an einem Motorrad fixierten bzw. fixierbaren Gepäckbehälter gemäß der Erfindung.

Figur 1 zeigt eine Befestigungseinrichtung 1 für einen abnehmbar an einem Motorrad (nicht dargestellt) fixierbaren Gepäckbehälter 2, bei dem es sich z. B. um ein Topcase handeln kann. Der Gepäckbehälter 2 ist bei dem hier gezeigten Ausführungsbeispiel von oben her auf eine plattenartige Halteeinrichtung 3 aufgesetzt. Die Halteeinrichtung 3 kann z. B. als "Gepäckbrücke" ausgebildet und z. B. mittig im Heckbereich des Motorrads angeordnet sein. Die Halteeinrichtung 3 kann z. B. an das Motorrad angeschraubt oder in anderer Weise daran befestigt sein.

Bei dem hier gezeigten Ausführungsbeispiel weist die Halteeinrichtung 3 in ihrem vorderen Bereich zwei rechteckförmige Durchbrechungen 4, 5 und in ihrem hinteren Bereich zwei U-förmige, rechteckförmige durch Ausbrechungen 6, 7 auf.

Von einer Unterseite 8 des Gepäckbehälters 2 stehen vier hakenartige bzw. L-förmige Formschlusselemente 9 - 12 ab. Die hakenartigen Formschlusselemente 9 - 12 wurden beim Aufsetzen des Gepäckbehälters in die zugeordneten Ausnehmungen 4 - 7 eingesetzt. Durch Verschieben des Gepäckbehälters 2 parallel zu einer Mittellängsachse 13 der Befestigungseinrichtung relativ zu der Halteeinrichtung 3 in die in Figur 1 gezeigte Position wird erreicht, dass die hakenartigen Formschlusselemente 9 - 12 die zugeordneten Ausnehmungen 4 - 7 von der Unterseite der Halteeinrichtung 3 her hintergreifen.

Wie aus Figur 1 ersichtlich ist, sind zwei weitere Formschlusselemente 14, 15 vorgesehen. Das Formschlusselement 14 greift zusammen mit dem Formschlusselement 9 in die Ausnehmung 4 ein, ohne diese jedoch zu hintergreifen. Das Formschlusselement 15 greift zusammen mit dem Formschlusselement 10 in die Ausnehmung 5 der Halteeinrichtung ein, ebenfalls ohne diese zu hintergreifen. Die Formschlusselemente 14, 15 sind verschieblich in Bezug auf den Gepäckbehälter 2 angeordnet. Sie bilden einen Teil eines im Folgenden noch näher zu erläuternden "Verschiebe- bzw. Betätigungsmechanismus".

Figur 2 zeigt die in Figur 1 dargestellte Betätigungseinrichtung 1 von schräg oben.

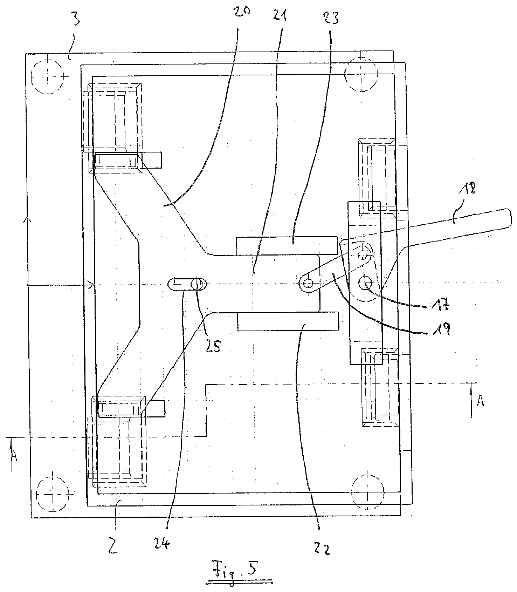

An einer Rückseite 16 des Gepäckbehälters 2 ist ein schwenkbar um eine Hochachse 17 des Gepäckbehälters 2 angeordneter Hebel 18 vorgesehen, was am besten aus Figur 5 ersichtlich ist. Der Hebel 18 ist über einen Übertragungshebel 19 gelenkig mit einem gabelförmigen bzw. Y-förmigen Schubstück 20 verbunden, dessen Mittelarm 21 in Verschieberichtung, d. h. parallel zur Mittellängsachse 13 (vgl. Figur 1) der Befestigungseinrichtung durch zwei Führungen 22, 23 geführt ist. Eine weitere Führung ist durch ein Langloch 24 gebildet, das in dem Schiebestück 20 vorgesehen ist und das mit einem darin eingreifenden Zapfen 25 zusammenwirkt, der mit der Unterseite des Gepäckbehälters 2 verbunden ist.

An einer Unterseite des Y-förmigen Schiebestücks 20 sind die beiden in Figur 1 gezeigten verschieblichen Formschlusselemente 14, 15 angeordnet. Die verschieblichen Formschlusselemente 14, 15 können einstückig mit dem Verschiebestück 20 verbunden sein.

Figur 5 zeigt den Gepäckbehälter 2 sowie die durch den Hebel 18, den Übertragungshebel 19 und das Schiebestück 20, an dem die beiden verschieblichen Formschlusselemente 14, 15 angeordnet sind, gebildeten Betätigungsmechanismus in einer Montage-/Demontagestellung.

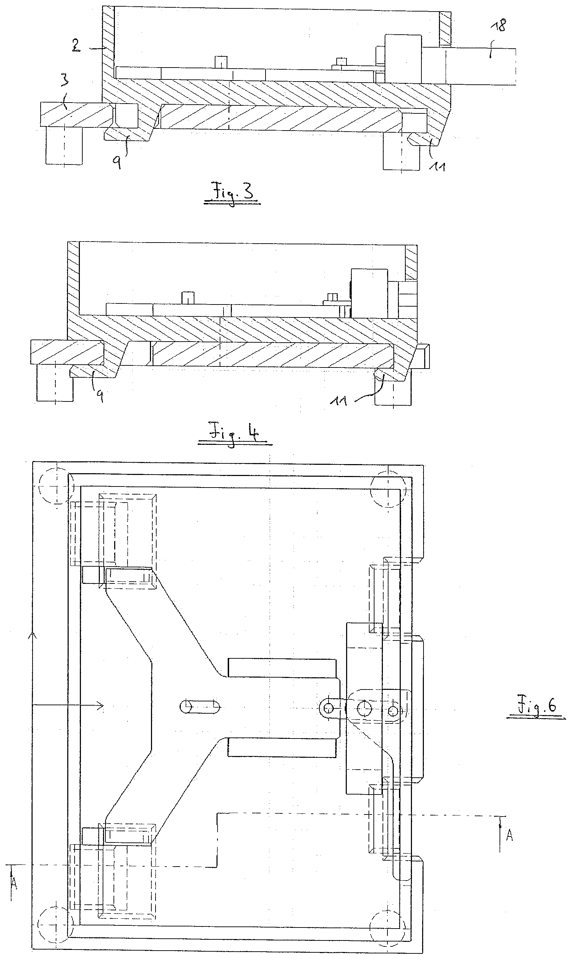

In der Montage-/Demontagestellung kann der Gepäckbehälter 2 auf die Halteeinrichtung 3 aufgesetzt werden. Nach dem Aufsetzen befindet sich der Gepäckbehälter 2 in der in Figur 3 gezeigten Montage-/Demontagestellung in Bezug auf die Halteeinrichtung 3. Der Hebel 18 ist dabei noch ausgeklappt (vgl. Figur 5). Lediglich die vorderen beiden fest angeordneten Formschlusselemente 9, 10 hintergreifen geringfügig die zugeordneten Aufnahmen 4, 5.

Durch Verschwenken des Hebels 18 in die in den Figuren 2, 3 gezeigte eingeklappte Stellung wird eine Relativverschiebung des Gepäckbehälters 2 in Bezug auf die Halteeinrichtung 3 erreicht. Der Gepäckbehälter 2 wird durch das Verschwenken des Hebels 18 "nach vorne" in Bezug auf die Halteeinrichtung 3 verschoben. Sobald der Hebel 18 eingeklappt" ist, ist die Haltestellung erreicht, in der alle vier fest angeordneten Formschlusselemente 9, 12 die zugeordneten Aufnahmen 4 - 7 von hinten bzw. von unten her hintergreifen, was am besten aus den Figuren 1 und 4 ersichtlich ist. In dieser Haltestellung ist der Gepäckbehälter 2 formschlüssige und somit sicher mit der Halteeinrichtung 3 verbunden.

Wie am besten aus Figur 6 ersichtlich aber auch aus Figur 5 erkennbar ist, befindet sich der Hebel 18 in der eingeklappten Stellung in einer Totpunkt- bzw. Übertotpunktposition. Dies bedeutet, dass selbst hohe Kräfte, die an dem Gepäckbehälter 2 angreifen und parallel zur Mittellängsachse 13 nach hinten in Bezug auf die Halteeinrichtung 3 wirken, nicht im Stande sind, den Gepäckbehälter 2 aus seiner in den Figuren 1, 4 gezeigten Haltestellung in die in Figur 3 gezeigte Montage-/Demontagestellung zu verschieben. Ein Lösen bzw. Verschieben des Gepäckbehälters ist nur durch Betätigen des Schwenkhebels 18 möglich.

## Patentansprüche

1. Befestigungseinrichtung (1) für einen abnehmbar an einem Motorrad fixierten bzw. fixierbaren Gepäckbehälter (2), insbesondere für einen am Heck eines Motorrads von oben her zu befestigenden Gepäckkoffer, mit:
• einem Gepäckbehälter (2), der
o eine Wandung (8) aufweist, von der
• mindestens zwei Formschlusselemente (9, 12) abstehen, die fest an dem Gepäckbehälter (2) angeordnet sind und
▪mindestens ein Formschlusselement (14, 15), das verschieblich zwischen einer Montage-/Demontagestellung und einer Haltestellung an dem Gepäckbehälter (2) angeordnet ist, und der
∘ eine Betätigungseinrichtung (14, 15, 18 - 20) aufweist, mittels der das mindestens eine verschieblich angeordnete Formschlusselement (14, 15) verschiebbar ist,
• einer Halteeinrichtung (3), die an einem Motorrad befestigt ist, und die mindestens zwei zur Aufnahme der mindestens zwei fest angeordneten Formschlusselemente (9 - 12) vorgesehene Aufnahmen (4- 7) und mindestens eine zur Aufnahme des mindestens einen verschieblich angeordneten Formschlusselements (14, 15) vorgesehene Aufnahme (4, 5) aufweist,
wobei
der Gepäckbehälter (2) durch Betätigen der Betätigungseinrichtung (14, 15, 18 - 20) relativ zu der Halteeinrichtung (3) von einer Montage-/Demontagestellung in eine Haltestellung, und umgekehrt, verschoben wird, wobei
• die Betätigungseinrichtung (14, 15, 18 - 20) ein von Hand zu betätigendes Betätigungselement (18) aufweist,
• das Betätigungselement (18) zwischen einer Montage-/Demontagestellung und einer Haltestellung hin- und herbewegbar ist, wobei es in der Montage-/Demontagestellung die Funktion eines Tragegriffs des Gepäckbehälters (2) hat und
• sich das Betätigungselement (18) in der Haltestellung in einer Totpunkt- bzw. Übertotpunktposition befindet, in der ein unbeabsichtigtes Verschieben des Gepäckbehälters (2) von seiner Haltestellung in seine Montage-/Demontagestellung mechanisch ausgeschlossen ist,
**dadurch gekennzeichnet, dass**
das Betätigungselement (18) ein an einer Rückseite (16) des Gepäckbehälters (2) schwenkbar um eine Hochachse (17) des Gepäckbehälters (2) angeordneter Hebel ist, der über einen Übertragungshebel (19) gelenkig mit einem gabelförmigen Schubstück (20) verbunden ist, dessen Mittelarm (21) in einer Verschieberichtung durch zwei Führungen (22, 23) geführt ist, wobei sich der Hebel in einer eingeklappten Stellung in einer Totpunkt- bzw. Übertotpunktposition befindet.

2. Befestigungseinrichtung (1) nach Anspruch 1, **dadurch gekennzeichnet, dass** die mindestens zwei fest an dem Gepäckbehälter (2) angeordneten Formschlusselemente (9 - 12) als hakenartigen Elemente ausgebildet sind, die in der Haltestellung des Gepäckbehälters (2) die ihnen zugeordneten Aufnahmen (4 -7) formschlüssig hintergreifen.

3. Befestigungseinrichtung (1) nach einem der Ansprüche 1 oder 2 **dadurch gekennzeichnet, dass** mindestens drei fest an den Gepäckbehälter (2) angeordnete Formschlusselemente (9 - 12) vorgesehen sind.

4. Befestigungseinrichtung (1) nach einem der Ansprüche 1 bis 3, **dadurch gekennzeichnet, dass** zwei verschieblich an dem Gepäckbehälter (2) angeordnete Formschlusselemente (14, 15) vorgesehen sind.

5. Befestigungseinrichtung (1) nach einem der Ansprüche 1 bis 4, **dadurch gekennzeichnet, dass** die Formschlusselemente (9 - 12, 14, 15) symmetrisch bezüglich einer Mittellängsachse (13) der Befestigungseinrichtung (1) angeordnet sind.

6. Befestigungseinrichtung (1) nach einem der Ansprüche 1 bis 5, **dadurch gekennzeichnet, dass** jeweils einem fest angeordneten Formschlusselement (9, 10) und einem verschieblich angeordneten Formschlusselement (14, 15) eine Aufnahme (4, 5) gemeinsam zugeordnet ist.

7. Befestigungseinrichtung (1) nach einem der Ansprüche 1 bis 6, **dadurch gekennzeichnet, dass** das mindestens eine verschieblich angeordnete Formschlusselement (14, 15), in die ihm zugeordnete Aufnahme (4, 5) ragt, ohne diese jedoch zu hintergreifen.

## Claims

1. A fastening means (1) for a luggage container (2) which is fixed or fixable removably to a motorcycle, especially for a luggage case which is to be fastened to the rear end of a motorcycle from above, having:
• a luggage container (2) which
∘ has a wall (8) from which
▪ at least two positively-locking elements (9, 12) which are arranged fixedly on the luggage container (2) protrude, and
▪ at least one positively-locking element (14, 15) which is arranged on the luggage container (2) displaceably between a mounting/dismounting position and a holding position, and which
∘ has an actuating means (14, 15, 18 - 20) by means of which the at least one displaceably arranged positively-locking element (14, 15) is displaceable,
• a holding means (3) which is fastened to a motorcycle, and which has at least two receptacles (4 - 7) provided for receiving the at least two fixedly arranged positively-locking elements (9 - 12) and at least one receptacle (4, 5) provided for receiving the at least one displaceably arranged positively-locking element (14, 15),
wherein
the luggage container (2) by actuating the actuating means (14, 15, 18 - 20) is displaced relative to the holding means (3) from a mounting/dismounting position into a holding position, and vice versa, wherein
• the actuating means (14, 15, 18 - 20) has a manually actuated actuating element (18),
• the actuating element (18) is movable back and forth between a mounting/dismounting position and a holding position, wherein in the mounting/dismounting position it has the function of a carrying handle of the luggage container (2), and
• the actuating element (18) in the holding position is in a dead centre position or above-dead centre position in which inadvertent displacement of the luggage container (2) from its holding position into its mounting/dismounting position is ruled out mechanically,
**characterised in that**
the actuating element (18) is a lever arranged on a rear side (16) of the luggage container (2) so as to be pivotable about a vertical axis (17) of the luggage container (2), which lever is articulated via a transmission lever (19) to a fork-shaped sliding piece (20), the central arm (21) of which is guided in a direction of displacement by two guides (22, 23), the lever in a folded-in position being in a dead centre position or above-dead centre position.

2. A fastening means (1) according to Claim 1, **characterised in that** the at least two positively-locking elements (9 - 12) arranged fixedly on the luggage container (2) are designed as hook-like elements which in the holding position of the luggage container (2) engage in positive manner behind the receptacles (4 - 7) which are associated therewith.

3. A fastening means (1) according to one of Claims 1 or 2, **characterised in that** at least three positively-locking elements (9 - 12) arranged fixedly on the luggage container (2) are provided.

4. A fastening means (1) according to one of Claims 1 to 3, **characterised in that** two positively-locking elements (14, 15) arranged displaceably on the luggage container (2) are provided.

5. A fastening means (1) according to one of Claims 1 to 4, **characterised in that** the positively-locking elements (9 - 12, 14, 15) are arranged symmetrically with respect to a central longitudinal axis (13) of the fastening means (1).

6. A fastening means (1) according to one of Claims 1 to 5, **characterised in that** a receptacle (4, 5) in each case is jointly associated with a fixedly arranged positively-locking element (9, 10) and a displaceably arranged positively-locking element (14, 15).

7. A fastening means (1) according to one of Claims 1 to 6, **characterised in that** the at least one displaceably arranged positively-locking element (14, 15) projects into the receptacle (4, 5) associated therewith without however engaging behind it.

## Revendications

1. Dispositif de fixation (1) d'un réceptacle à bagages fixé ou pouvant être fixé de manière amovible sur une moto, en particulier d'un coffre à bagages destiné à être fixé par le haut à l'arrière d'une moto comprenant :
- un réceptacle à bagages (2) qui :
- comporte une paroi (8) à partir de laquelle :
- s'écartent au moins deux éléments de liaison par la forme (9, 12) qui sont montés solidairement sur le réceptacle à bagages (2), et
- au moins un élément de liaison par la forme (14, 15), qui est monté mobile en translation entre une position de montage/démontage et une position de retenue, sur le réceptacle à bagages (2), et
- comporte un dispositif de manoeuvre (14, 15, 18 - 20) au moyen duquel l'élément de liaison par la forme (14, 15) monté mobile en translation peut être déplacé en translation,
- un dispositif de retenue (3) qui est fixé sur une moto et comporte au moins deux logements (4, 7) de réception des éléments de liaison par la forme (9-12) fixes et au moins un logement (4, 5) de réception de l'élément de liaison par la forme (14, 15) mobile en translation,
- le réceptacle à bagages (2) étant déplacé par rapport au dispositif de retenue (3) par manoeuvre du dispositif de manoeuvre (14, 15, 18 - 20) d'une position de montage/démontage à une position de retenue et inversement,
- le dispositif de manoeuvre (14, 15, 18 - 20) comportant un élément de manoeuvre (18) pouvant être manoeuvré manuellement,
- l'élément de manoeuvre (18) étant mobile en va-et-vient entre une position de montage/démontage et une position de retenue, et ayant la fonction d'une poignée de manutention du réceptacle à bagages (2) dans la position de montage/démontage, et
- dans la position de retenue, l'élément de manoeuvre (18) étant situé dans une position de point mort ou au-delà d'une position de point mort dans laquelle une translation involontaire du réceptacle à bagages (2) de sa position de retenue dans sa position de montage/démontage est mécaniquement impossible,
**caractérisé en ce que**
- l'élément de manoeuvre (18) est un levier monté pivotant autour d'un axe vertical (17) du réceptacle à bagages (2) sur la face arrière (16) de ce réceptacle et qui est articulé par l'intermédiaire d'un levier de transmission (19) avec une pièce de poussée en forme de fourche (20) dont le bras médian (21) est guidé dans une direction de translation par deux organes de guidage (22, 23), le levier étant situé dans une position enclipsée dans la position de point mort ou au-delà du point mort.

2. Dispositif de fixation (1) conforme à la revendication 1,
**caractérisé en ce que**
les éléments de liaison par la forme (9-12) montés solidairement sur le réceptacle à bagages (2) sont réalisés sous la forme d'éléments en forme de crochets qui, dans la position de retenue du réceptacle à bagages (2) s'engagent par l'arrière par une liaison par la forme dans les logements de réception (4-7) qui leurs sont associés.

3. Dispositif de fixation (1) conforme à l'une des revendications 1 et 2, **caractérisé en ce qu'**
il est prévu au moins trois éléments de liaison par la forme (9-12) montés solidairement sur le réceptacle à bagages (2).

4. Dispositif de fixation (1) conforme à l'une des revendications 1 à 3, **caractérisé en ce qu'**
il est prévu deux éléments de liaison par la forme (14, 15) montés mobiles en translation sur le réceptacle à bagages (2).

5. Dispositif de fixation (1) conforme à l'une des revendications 1 à 4, **caractérisé en ce que**
les éléments de liaison par la forme (9-12, 14, 15) sont montés symétriquement par rapport à l'axe longitudinal médian (13) du dispositif de fixation (1).

6. Dispositif de fixation (1) conforme à l'une des revendications 1 à 5, **caractérisé en ce qu'**
un élément de liaison par la forme (9, 10) fixe et à un élément de liaison par la forme (14, 15) mobile en translation est respectivement associé un logement de réception (4, 5) commun.

7. Dispositif de fixation (1) conforme à l'une des revendications 1 à 6, **caractérisé en ce que**
l'élément de liaison par la forme (14, 15) mobile en translation pénètre dans le logement de réception (4, 5) qui lui est associé sans toutefois s'engager par l'arrière dans celui-ci.
